(19) Europäisches Patentamt
European Patent Office
Office européen des brevets

(11) EP 2 441 799 A1

(12) **EUROPEAN PATENT APPLICATION**
published in accordance with Art. 153(4) EPC

(43) Date of publication:
**18.04.2012 Bulletin 2012/16**

(21) Application number: **10786256.7**

(22) Date of filing: **07.06.2010**

(51) Int Cl.:
***C08L 33/02*** *(2006.01)* ***B01F 17/52*** *(2006.01)*
***B01J 13/00*** *(2006.01)* ***B05D 7/00*** *(2006.01)*
***C08J 3/03*** *(2006.01)* ***C08J 7/04*** *(2006.01)*
***C08L 23/02*** *(2006.01)* ***C08L 23/26*** *(2006.01)*
***C08L 101/00*** *(2006.01)* ***C09D 5/02*** *(2006.01)*
***C09D 123/04*** *(2006.01)* ***C09D 123/10*** *(2006.01)*
***C09D 133/02*** *(2006.01)* ***C09D 151/06*** *(2006.01)*

(86) International application number:
**PCT/JP2010/059990**

(87) International publication number:
**WO 2010/143725 (16.12.2010 Gazette 2010/50)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **11.06.2009 JP 2009139960**

(71) Applicant: **Sumitomo Chemical Company, Limited**
**Tokyo 104-8260 (JP)**

(72) Inventors:
- **HIGO, Mutsuko**
  **Toyonaka-shi**
  **Osaka 560-0026 (JP)**
- **NAGANO, Masashi**
  **Osaka (JP)**
- **MORIMOTO, Junji**
  **Toyonaka-shi**
  **Osaka 560-0021 (JP)**

(74) Representative: **Vossius & Partner**
**Siebertstrasse 4**
**81675 München (DE)**

(54) **AQUEOUS EMULSION**

(57) An aqueous emulsion comprising the following components (A), (B) and (C):
(A) an acrylic resin comprising a structural unit derived from an $\alpha$, $\beta$-unsaturated carboxylic acid, and a structural unit derived from an $\alpha$, $\beta$-unsaturated carboxylic acid ester derived from an aliphatic diol having 1 to 10 carbon atoms and having at least one hydroxyl group bonded to a primary carbon atom or a secondary carbon atom and an $\alpha$, $\beta$-unsaturated carboxylic acid
(B) a thermoplastic polymer
(C) water.

EP 2 441 799 A1

## Description

Technical Field

The present invention relates to an aqueous emulsion.

Background Art

Polypropylene is used for automobile parts such as a bumper because it has superior workability and strength. Coating materials are usually applied on the automobile parts for decoration or the like. The other materials such as coating materials are, however, difficult to adhere on a surface of polypropylene, and therefore, it is usually conducted that a chlorinated polyolefin having a superior adhesiveness to polypropylene is applied onto a polypropylene followed by applying coating materials thereon (e.g. JP Heisei 5-7832 A).

Disclosure of the Invention

The present invention provides:

<1> An aqueous emulsion comprising the following components (A), (B) and (C):

(A) an acrylic resin comprising a structural unit derived from an α, β-3-unsaturated carboxylic acid, and a structural unit derived from an α, β-unsaturated carboxylic acid ester derived from an aliphatic diol having 1 to 10 carbon atoms and having at least one hydroxyl group bonded to a primary carbon atom or a secondary carbon atom and an α, β-unsaturated carboxylic acid
(B) a thermoplastic polymer
(C) water;

<2> The aqueous emulsion according to <1>, wherein component (B) contains a thermoplastic polymer comprising a structural unit derived from ethylene and/or propylene;
<3> The aqueous emulsion according to <1> or <2>, wherein component (B) contains a copolymer comprising a structural unit derived from ethylene and/or propylene and a structural unit derived from a vinyl compound represented by the formula (I):

$$CH_2=CH\text{-}R \qquad (I)$$

wherein R represents a secondary alkyl group, a tertiary alkyl group or a alicyclic hydrocarbon group,
or a polymer obtained by graft polymerizing an α, β-unsaturated carboxylic acid anhydride to the copolymer;
<4> The aqueous emulsion according to <3>, wherein the vinyl compound represented by the formula (I) is vinylcyclohexane;
<5> The aqueous emulsion according to any of <1> to <4>, wherein component (B) is a thermoplastic polymer of which MFR (190˚C, 2.16 kgf) is 130 g/10-minute or more and 300 g/10-minute or less;
<6> The aqueous emulsion according to any of <1> to <5>, wherein the aqueous emulsion is an aqueous emulsion in which a dispersoid is the above-mentioned components (A) and (B) and a dispersion medium is the above-mentioned component (C), and the volume-based median diameter of the dispersoid is 0.01 μm to 3 μm;
<7> The aqueous emulsion according to any of <1> to <6>, wherein the aliphatic diol having 1 to 10 carbon atoms and having at least one hydroxyl group bonded to a primary carbon atom or a secondary carbon atom is an α, ω-alkanediol having 1 to 10 carbon atoms;
<8> A process for producing an aqueous emulsion comprising a step of melt-kneading components (A) and (B) followed by mixing the melting mixture obtained with water:

(A) an acrylic resin comprising a structural unit derived from an α, β-unsaturated carboxylic acid, and a structural unit derived from an α, β-unsaturated carboxylic acid ester derived from an aliphatic diol having 1 to 10 carbon atoms and having at least one hydroxyl group bonded to a primary carbon atom or a secondary carbon atom and an α, β-unsaturated carboxylic acid
(B) a thermoplastic polymer
(C) water;

<9> A cured product obtained by drying the aqueous emulsion according to any of <1> to <6>;

<10> A laminate comprising a base material layer consisting of at least one material selected from the group consisting of a wood-based material, a cellulosic material, a plastic material, a ceramic material and a metallic material, and a layer consisting of the cured product according to <9>;
<11> A process for producing a laminate comprising a step of coating the aqueous emulsion according to any of <1> to <8> onto a base material layer consisting of at least one material selected from the group consisting of a wood-based material, a cellulosic material, a plastic material, ceramic material and a metallic material to obtain a laminate having the base material layer and a layer comprising the aqueous emulsion, and a step of drying the laminate obtained in the above-mentioned step to obtain a laminate comprising the base material layer and a cured product layer obtained from the aqueous emulsion;
<12> An emulsifying agent comprising an acrylic resin comprising a structural unit derived from an α, β-unsaturated carboxylic acid, and a structural unit derived from an α, β-unsaturated carboxylic acid ester derived from an aliphatic diol having 1 to 10 carbon atoms and having at least one hydroxyl group bonded to a primary carbon atom or a secondary carbon atom and an α, β-unsaturated carboxylic acid as an active ingredient;
<13> The emulsifying agent according to <12>, wherein the structural unit derived from an α, β-unsaturated carboxylic acid is a structural unit derived from at least one selected from the group consisting of acrylic acid and methacrylic acid.

Best Modes for Carrying Out the Invention

The aqueous emulsion of the present invention comprises the following components (A), (B) and (C):

(A) an acrylic resin comprising a structural unit derived from an α, β-unsaturated carboxylic acid (hereinafter, simply referred to as the structural unit (al)), and a structural unit derived from an α, β-unsaturated carboxylic acid ester derived from an aliphatic diol having 1 to 10 carbon atoms and having at least one hydroxyl group bonded to a primary carbon atom or a secondary carbon atom and an α, β-unsaturated carboxylic acid (hereinafter, simply referred to as the structural unit (a2)),
(B) a thermoplastic polymer,
(C) water.

First, component (A) will be illustrated.
Component (A) is an acrylic resin comprising the structural unit (a1) and the structural unit (a2).
Examples of the α, β-unsaturated carboxylic acid from which the structural unit (a1) is derived include an α, β-unsaturated carboxylic acid having 3 to 20 carbon atoms such as acrylic acid, methacrylic acid, crotonic acid, isocrotonic acid, maleic acid, fumaric acid, itaconic acid, citraconic acid, angelic acid, sorbic acid and mesaconic acid. As the α, β-unsaturated carboxylic acid, an α, β-unsaturated carboxylic acid having one or two carboxyl groups (-COOH) is preferable.
The acrylic resin of component (A) may be contain two or more kinds of the structural unit (a1).
As the structural unit (a1) at least one selected from the groups consisting of a structural unit derived from acrylic acid and a structural unit derived from methacrylic acid is preferable.
The α, β-unsaturated carboxylic acid ester from which the structural unit (a2) is derived is derived from an aliphatic diol having 1 to 10 carbon atoms and having at least one hydroxyl group bonded to a primary carbon atom or a secondary carbon atom and an α, β-unsaturated carboxylic acid. Examples of the α, β-unsaturated carboxylic acid include the same as described above, and acrylic acid or methacrylic acid is preferable.
The above-mentioned aliphatic diol having 1 to 10 carbon atoms is an aliphatic compound of which number of carbon atoms is 1 to 10 and which has two hydroxyl groups, and at least one hydroxyl groups among the hydroxyl groups is bonded to a primary carbon atom or a secondary carbon atom. "Primary carbon atom" is a carbon atom bonded to only another carbon atom, and "secondary carbon atom" is a carbon atom bonded to the other two carbon atoms. Therefore, the above-mentioned aliphatic diol having 1 to 10 carbon atoms has a hydroxyl group bonded to a methylene group or a methine group. An aliphatic diol having 1 to 10 carbon atoms and having at least one hydroxyl group bonded to a primary carbon atom is preferable, and an α, ω-alkanediol having 1 to 10 carbon atoms is more preferable. The α, ω-alkanediol is represented by the following formula

$$HO\text{-}(CH_2)_y\text{-}OH$$

wherein y represents an integer of 1 to 10, and specific examples thereof include 2-hydroxyethanol, 3-hydroxypropanol, 4-hydroxybutanol, 5-hydroxypentanol and 6-hydroxyhexanol.
Examples of the α, β-unsaturated carboxylic acid ester from which the structural unit (a2) is derived include 1-hydroxymethyl acrylate, 2-hydroxyethyl acrylate, 2-hydroxypropyl acrylate, 4-hydroxybutyl acrylate, 5-hydroxypentyl acrylate, 6-hydroxyhexyl acrylate, 1-hydroxymethyl methacrylate, 2-hydroxyethyl methacrylate, 2-hydroxypropyl methacrylate, 4-hydroxybutyl methacrylate, 5-hydroxypentyl methacrylate and 6-hydroxyhexyl methacrylate, and 1-hydroxymethyl acrylate, 2-hydroxyethyl acrylate, 2-hydroxypropyl acrylate, 4-hydroxybutyl acrylate, 1-hydroxymethyl methacrylate, 2-hydroxyethyl methacrylate, 2-hydroxypropyl methacrylate and 4-hydroxybutyl methacrylate are preferable.

The acrylic resin of component (A) may have two or more kinds of the structural unit (a2).

The content of the structural unit (a1) in the acrylic resin of component (A) is usually 0.1 to 99.9 moles relative to 100 moles of the all structural units of which the acrylic resin is composed, and preferably 2 to 99 moles and more preferably 5 to 99 moles.

The content of the structural unit (a2) in the acrylic resin of component (A) is usually 0.1 to 99.9 moles relative to 100 moles of the all structural units of which the acrylic resin is composed, and preferably 1 to 98 moles and more preferably 1 to 95 moles.

The acrylic resin of component (A) may contain two or more kinds of the acrylic resin.

The acrylic resin of component (A) may have other structural unit in addition to the structural unit (a1) and the structural unit (a2).

Examples of the other structural unit include

a structural unit derived from an α, β-unsaturated carboxylic acid ester derived from an aliphatic alcohol having 1 to 20 carbon atoms and an α, β-unsaturated carboxylic acid (hereinafter, simply referred to as the structural unit (b1)),

a structural unit derived from an α, β-unsaturated carboxylic acid ester derived from an aliphatic alcohol having 1 to 10 carbon atoms and having an amino group which may have a substituent (s) and an α, β-unsaturated carboxylic acid (hereinafter, simply referred to as the structural unit (b2)), and

a structural unit derived from an α, β-unsaturated carboxylic acid ester derived from an aliphatic alcohol having a carboxylic acid group and having 1 to 10 carbon atoms and an α, β-unsaturated carboxylic acid (hereinafter, simply referred to as the structural unit (b3)).

Examples of the α, β-unsaturated carboxylic acid from which the other structural units are derived include the same as described above, and acrylic acid or methacrylic acid is preferable.

The α, β-unsaturated carboxylic acid ester from which the structural unit (b1) is derived is derived from an aliphatic alcohol having 1 to 20 carbon atoms and an α, β-unsaturated carboxylic acid. Examples of the aliphatic alcohol having 1 to 20 carbon atoms include a linear, branched chain or cyclic aliphatic alcohol having 1 to 20 carbon atoms such as methanol, ethanol, propanol, isopropanol, butanol, tert-butanol, pentanol, 3-methylbutnaol, 2,2-dimethylpropanol, 3-methyl-2-butanol, 2-ethylhexanol, nonanol, decanol, dodecanol, tridecanol, hexadecanol, octadecanol and cyclohexanol.

Examples of the α, β-unsaturated carboxylic acid ester derived is derived from an aliphatic alcohol having 1 to 20 carbon atoms and an α, β-unsaturated carboxylic acid include methyl acrylate, ethyl acrylate, propyl acrylate, butyl acrylate, pentyl acrylate, 3-methylbutyl acrylate, 2,2-dimethylpropyl acrylate, 3-methyl-2-butyl acrylate, 2-ethylhexyl acrylate, nonyl acrylate, decyl acrylate, dodecyl acrylate, tridecyl acrylate, hexadecyl acrylate, octadecyl acrylate, cyclohexyl acrylate, methyl methacrylate, ethyl methacrylate, propyl methacrylate, butyl methacrylate, pentyl methacrylate, 2-methyl-2-butyl methacrylate, 2-ethylhexyl methacrylate, nonyl methacrylate, decyl methacrylate, dodecyl methacrylate, tridecyl methacrylate, hexadecyl methacrylate, octadecyl methacrylate and cyclohexyl methacrylate.

The acrylic resin of component (A) may have two or more kinds of the structural unit (b1).

The α, β-unsaturated carboxylic acid ester from which the structural unit (b2) is derived is derived from an aliphatic alcohol having 1 to 10 carbon atoms and having an amino group which may have a substituent(s) and an α, β-unsaturated carboxylic acid.

Examples of the amino group which may have a substituent(s) include an amino group; an amino group having a linear, branched chain or cyclic alkyl group having 1 to 10 carbon atoms such as a methylamino group, an ethyamino group, a propylamino group, an isopropylamino group, a butylamino group, an isobutylamino group, a sec-butylamino group and a tert-butylamino group; an amino group having two linear, branched chain or cyclic alkyl groups having 1 to 10 carbon atoms such as a dimethylamino group, a methylethyamino group, a diethylamino group and a dipropylamino group; and a cyclic amino group. An amino group having two linear or branched chain alkyl groups having 1 to 10 carbon atoms is preferable, and an amino group having two linear or branched chain alkyl groups having 1 to 3 carbon atoms is more preferable.

Examples of the aliphatic alcohol having 1 to 10 carbon atoms include a linear, branched chain or cyclic aliphatic alcohol having 1 to 10 carbon atoms such as methanol, ethanol, propanol, isopropanol, butanol, tert-butanol, pentanol, 3-methylbutnaol, 2,2-dimethylpropanol, 3-methyl-2-butanol, 2-ethylhexanol, nonanol, decanol and cyclohexanol. A linear, branched chain or cyclic aliphatic alcohol having 1 to 4 carbon atoms is preferable.

Examples of the aliphatic alcohol having 1 to 10 carbon atoms and having an amino group which may have a substituent (s) include N,N-dimethylaminoethanol, N,N-diethylaminoethanol, N-methyl-N-ethylaminoethanol, N,N-dipropylaminoethanol, N-methyl-N-propylaminoethanol, N-ethyl-N-propylaminoethanol, N,N-dimethyl.aminopropanol and N,N-dimethylaminobutanol.

Examples of the α, β-unsaturated carboxylic acid ester derived from an aliphatic alcohol having 1 to 10 carbon atoms and having an amino group which may have a substituent(s) and an α, β-unsaturated carboxylic acid include N,N-diethylaminoethyl acrylate, N,N-diethylaminoethyl methacrylate, N,N-dimethylaminoethyl acrylate, N,N-dimethylaminoethyl methacrylate, N-methyl-N-ethylaminoethyl acrylate and N-methyl-N-ethylaminoethyl methacrylate, and N,N-dimethylaminoethyl methacrylate is preferale.
The acrylic resin of component (A) may have two or more kinds of the structural unit (b2).

The structural unit (b3) is derived from an α, β-unsaturated carboxylic acid ester derived from an aliphatic alcohol having a carboxylic acid group and having 1 to 10 carbon atoms and an α, β-unsaturated carboxylic acid. Herein, "carboxylic acid group" means an organic group having a carboxyl group (-COOH), and examples thereof include a carboxymethyl group, a 1,2-dicarboxyethyl group, a 2-carboxyphenyl group and a 2,3-dicarboxyphenyl group.
Examples of the α, β-unsaturated carboxylic acid ester derived from the aliphatic alcohol having a carboxylic acid group and having 1 to 10 carbon atoms and the α, β-unsaturated carboxylic acid include 2-acryloyloxyethyl succinic acid, 2-acryloyloxyethyl phthalic acid, 2-methacryloyloxyethyl succinic acid and 2-methacryloyloxyethyl phthalic acid.
The acrylic resin of component (A) may have two or more kinds of the structural unit (b3).

The acrylic resin of component (A) preferably contains the structural unit (b1).
When the acrylic resin of component (A) contains the structural unit (b1), the content of the structural unit (b1) is usually 5 to 95 moles relative to 100 moles of all structural units of which the acrylic resin is composed and preferably 10 to 80 moles.
The content of the structural unit (b2) in the acrylic resin of component (A) is usually 0 to 80 moles relative to 100 moles of all structural units of which the acrylic resin is composed and preferably 1 to 50 moles.
The content of the structural unit (b3) in the acrylic resin of component (A) is usually 0 to 80 moles relative to 100 moles of all structural units of which the acrylic resin is composed and preferably 1 to 50 moles.

As the acrylic resin of component (A), an acrylic resin wherein the resin contains 5 to 80 moles of the structural unit (a1), 1 to 40 moles of the structural unit (a2), 10 to 80 moles of the structural unit (b1), 1 to 50 moles of the structural unit (b2) and 5 to 40 moles of the structural unit (b3), and the total of the structural units (a1), (a2), (b1) (b2) and (b3) is 100 moles is preferable.

The acrylic resin of component (A) may contain a structural unit derived from ethylene, a structural unit derived from propylene, a structural unit derived from the linear α-olefin having 4 or more carbon atoms described below, a structural unit derived from the vinyl compound represented by the formula (I) described below, a structural unit derived from an addition-polymerizable monomer described below or the like. The content thereof may be an amount where the adhesiveness of the cured product obtained from the aqueous emulsion of the present invention is not damaged, and it is preferably about 5 moles or less relative to 100 moles of all structural units of which the acrylic resin is composed, and that of the structural unit derived from an addition-polymerizable monomer is preferably 1 mole or less.

The acrylic resin of component (A) can be produced by addition-polymerizing the monomers from which the structural units are derived, respectively. For example, examples thereof include a method comprising mixing a solvent such as an alcohol solvent such as isopropanol and water with the monomers, mixing the mixture obtained with a polymerization initiator such as a radical initiator usually at 70 to 100˚C, preferably at 75 to 95˚C and more preferably at 75 to 85˚C, and then, stirring the mixture obtained for about 1 to 24 hours, and a method comprising mixing the above-mentioned solvent with a part of the monomers, mixing the mixture obtained with a polymerization initiator and the residual monomers usually at 70 to 100˚C, preferably at 75 to 95˚C and more preferably at 75 to 85˚C, and then, stirring the mixture obtained for about 1 to 24 hours. In order to control the polymerization reaction, a solution obtained by dissolving a polymerization initiator and the residual monomers in an organic solvent may be used.
The used amount of the polymerization initiator is usually 0.01 to 5 parts by weight relative to 100 parts of the total of the monomers, and preferably 0.2 to 3 parts by weight.

Examples of the polymerization initiator include an azo compound such as 2,2'-azobisisobutyronitrile, 2,2'-azobis(2-methylbutyronitrile), 1,1'-azobis(cyclohexane-1-carbonitrile), 2,2'-azobis(2,4-dimethylvaleronitrile), 2,2'-azobis (2,4-dimethyl-4-methoxyvaleronitrile), dimethyl-2,2'-azobis(2-methylpropionate) and 2,2'-azobis(2-hydroxymethylpropionitrile); an organic peroxide such as lauryl peroxide, tert-butylhydroperoxide, benzoylperoxide, tert-butyl peroxybenzoate, cumenehydroperoxide, diisopropyl peroxycarbonate, dipropyl peroxycarbonate, tert-butyl peroxyneodecanoate, tert-butyl peroxypivalate and (3,5,5-trimethylhexanoyl)peroxide; and an inorganic peroxide such as potassium peroxide, ammonium peroxide and hydrogen peroxide. Redox-typed initiators in which a polymerization initiator and a reducing agent are used in combination can be also used as the polymerization initiator.

The aqueous emulsion of the present invention provides a cured product having a superior adhesiveness to a base material such as polypropylene by drying, for example, at about 90˚C to 120˚C. The aqueous emulsion of the present invention also provides a cured product having a superior adhesiveness to a base material such as polypropylene by drying in a range of 60˚C or more and 90˚C or less, and preferably 65˚C to 80˚C.

Component (A) acts as an emulsifying agent for dispersing component (B) into component (C) in the aqueous emulsion of the present invention.
The emulsifying agent of the present invention contains component (A) and preferably further contains water. When the emulsifying agent of the present invention contains component (A) and water, it may further contain an ammonium cation. As the ammonium cation source, ammonia is preferable. Degree of $NH_3$ neutralization of the emulsifying agent

of the present invention is preferably 50 to 300, and more preferably 100 to 200. Herein, "degree of $NH_3$ neutralization" means a ratio of mole number of ammonium cation contained in the emulsifying agent to total mole number of the structural unit derived from the monomer having an anionic group contained in component (A). Examples of the structural unit derived from the monomer having an anionic group include the structural unit (a1) and the structural unit (b3).

Next, component (B) will be illustrated.

Component (B) is a thermoplastic polymer, and specific examples thereof include a thermoplastic polymer comprising a structural unit derived from ethylene, a thermoplastic polymer comprising a structural unit derived from propylene, a structural unit derived from an ester-typed waxes, carnauba wax, Fischer-Tropsch wax, microcrystallin wax, paraffin wax and a oxide thereof, or an amide compound such as low-molecular weight polyamide and aliphatic amide.

As the thermoplastic polymer, a thermoplastic polymer comprising a structural unit derived from ethylene and/or propylene is preferable. Examples of the thermoplastic polymer comprising a structural unit derived from ethylene and/or propylene include polyethylene such as low-density polyethylene, polyethylene wax, ethylene·vinyl acetate copolymer, ethylene·propylene·vinyl acetate copolymer, ethylene·acrylic acid copolymer, ethylene·propylene·acrylic acid copolymer, ethylene·acrylate copolymer, ethylene·propylene·acrylate copolymer, ethylene·acrylic acid copolymer, ethylene·propylene·methacrylic acid copolymer, ethylene·methacrylate copolymer, ethylene·propylene·methacrylate copolymer, polypropylene, ethylene·propylene copolymer, ethylene·hexene copolymer, propylene·hexene copolymer, ethylene·propylene·hexene copolymer, ethylene·butene copolymer, propylene·butene copolymer, ethylene·propylene·butene copolymer, and maleic anhydride modified product thereof.

Among them, preferred are a copolymer comprising a structural unit derived from ethylene and/or propylene and a structural unit derived from a vinyl compound represented by the formula (I)

$$CH_2=CH-R \qquad (I)$$

wherein R represents a secondary alkyl group, a tertiary alkyl group or an alicyclic hydrocarbon group (hereinafter, simply referred to as the vinyl compound (I)) (hereinafter, simply referred to as the polymer (B-1)), and a polymer obtained by graft polymerizing an α, β-unsaturated carboxylic acid anhydride to the the polymer (B-1) (hereinafter, simply referred to as the polymer (B-2)).

As the secondary alkyl group represented by R, a secondary alkyl group having 3 to 20 carbon atoms is preferable, as the tertiary alkyl group, a tertiary alkyl group having 4 to 20 carbon atom is preferable, and as the alicyclic hydrocarbon group, an alicyclic hydrocarbon group having a three- to sixteen-membered ring is preferable. examples of the alicyclic hydrocarbon group include a cycloalkyl group, a cycloalkenyl group and a cycloalkynyl group, and a cycloalkyl group is preferable.

As R, a three- to ten-membered alicyclic hydrocarbon group having 3 to 20 carbon atoms and a tertiary alkyl group having 4 to 20 carbon atoms are more preferable.

Examples of the vinyl compound (I) include the vinyl compound (I) wherein R is a secondary alkyl group such as 3-methyl-1-butene, 3-methyl-1-pentene, 3-methyl-1-hexene, 3-methyl-1-heptene, 3-methyl-1-octene, 3,4-dimethyl-1-pentene, 3,4-dimethyl-1-hexene, 3,4-dimethyl-1-heptene, 3,4-dimethyl-1-octene, 3,5-dimethyl-1-hexene, 3,5-dimethyl-1-heptene, 3,5-dimethyl-1-octene, 3,6-dimethyl-1-heptene, 3,6-dimethyl-1-octene, 3,7-dimethyl-1-octene, 3,4,4-trimethyl-1-pentene, 3,4,4-trimethyl-1-hexene, 3,4,4-trimethyl-1-heptene and 3,4,4-trimethyl-1-octene; the vinyl compound (I) wherein R is a tertiary alkyl group such as 3,3-dimethyl-1-butene, 3,3-dimethyl-1-pentene, 3,3-dimethyl-1-hexene, 3,3-dimethyl-1-heptene, 3,3-dimethyl-1-octene, 3,3,4-trimethyl-1-pentene, 3,3,4-trimethyl-1-hexene, 3,3,4-trimethyl-1-heptene and 3,3,4-trimethyl-1-octene; the vinyl compound (I) wherein R is a cycloalkyl group such as vinylcyclopropane, vinylcyclobutene, vinylcyclopentane, vinylcyclohexane, vinylcycloheptane and vinylcyclooctane; 1-vinyladamantane, 5-vinyl-2-norbornene and 4-vinyl-1-cyclohexene.

Among them, preferred are 3-methyl-1-butene, 3-methyl-1-pentene, 3-methyl-1-hexene, 3,4-dimethyl-1-pentene, 3,5-dimethyl-1-hexene, 3,4,4-trimethyl-1-pentene, 3,3-d.imethyl-1-butene, 3,3-dimethyl-1-pentene, 3,3,4-trimethyl-1-pentene, vinylcyclopentane, vinylcyclohexane, vinylcycloheptane, vinylcyclooctane and 5-vinyl-2-norbornene, and more preferred are 3-methyl-1-butene, 3-methyl-1-pentene, 3,4-dimethyl-1-pentene, 3,3-dimethyl-1-butene, 3,3,4-trimethyl-1-pentene, vinylcyclohexane and vinylnorbornene, especially preferred are 3, 3-dimethyl-1-butene and vinylcyclohexane, and most preferred is vinylcyclohexane.

The content of the structural unit derived from the vinyl compound (I) in the polymer (B-1) is usually 5 to 40 moles relative to 100 moles of all structural units of which the polymer (B-1) is composed, and from the viewpoint of the adhesiveness of the cured product obtained by drying the aqueous emulsion of the present invention, it is preferably 10 to 30 moles and more preferably 10 to 20 moles.

The content of the structural unit derived from the vinyl compound (I) can be evaluated by $^1H$-NMR analysis or $^{13}C$-NMR analysis.

The polymer (B-1) may further contain a structural unit derived from a linear α-olefin having 4 to 20 carbon atoms. Examples of the linear α-olefin having 4 to 20 carbon atoms include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nanodecene and 1-eicosene. Among them, preferred are 1-butene, 1-pentene, 1-hexene and 1-octene.

The total content of the structural unit derived from ethylene, the structural unit derived from propylene and the structural unit derived from the linear α-olefin having 4 to 20 carbon atoms in the polymer (B-1) is usually 95 to 60 moles relative to 100 moles of all structural units of which the polymer (B-1) is composed, preferably 90 to 70 moles and more preferably 90 to 80 moles.

The polymer (B-1) may further contain a structural unit derived from an addition-polymerizable monomer.

The addition-polymerizable monomer is a monomer excluding ethylene, propylene, a linear α-olefin and the vinyl compound (I), and being an addition-polymerizable monomer with ethylene, propylene, a linear α-olefin and the vinyl compound (I), and the carbon number of such monomer is usually about 3 to 20.

Specific examples of the addition-polymerizable monomer include a cycloolefin, an olefin represented by the formula (II)

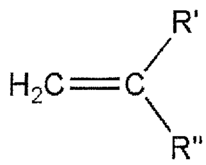

(II)

wherein, R' and R" independently represent a linear, branched or cyclic alky group having 1 to 18 carbon atoms, or a halogen atom, a diene compound, a vinyl halide, a vinyl aliphatic carboxylate, a vinyl ether compound, a cyanovinyl compound, the above-mentioned α, β-unsaturated carboxylic acid, the above-mentioned α, β-unsaturated carboxylic acid ester and the α, β-unsaturated carboxylic acid anhydride described below.

Examples of the cycloolefin include cyclobutene, cyclopentene, cyclohexene, cyclooctene, 3-methylcyclopentene, 4-methylcyclopentene, 3-methylcyclohexene, 2-norbornene, 5-methyl-2-norbornene, 5-ethyl-2-norbornene, 5-butyl-2-norbornene, 5-phenyl-2-norbornene, 5-benzyl-2-norbornene, 2-tetracyclododecene, 2-tricyclodecene, 2-tricycloundecene, 2-pentacyclopentadecene, 2-pentacyclohexadecene, 8-methyl-2-tetracyclododecene, 8-ethyl-2-tetracyclododecene, 5-acetyl-2-norbornene, 5-acetyloxy-2-norbornene, 5-methoxycarbonyl-2-norbornene, 5-ethoxycarbonyl-2-norbornene, 5-methyl-5-rnethoxycarbonyl-2-norbornene, 5-cyano-2-norbornene, 8-methoxycarbonyl-2-tetracyclododecene, 8-methyl-8-methoxycarbonyl-2-tetracyclododecene and 8-cyano-2-tetracyclododecene. Among them, preferred are cyclopentene, cyclohexene, cyclooctene, 2-norbornene, 5-methyl-2-norbornene, 5-phenyl-2-norbornene, 2-tetracyclododecene, 2-tricyclodecene, 2-tricycloundecene, 2-pentacyclopentadecene, 2-pentacyclohexadecene, 5-acetyl-2-norbornene, 5-acetyloxy-2-norbornene, 5-methoxycarbonyl-2-norbornene, 5-methyl-5-methoxycarbonyl-2-norbornene and 5-cyano-2-norbornene, and more preferred are 2-norbornene and 2-tetracyclododecene.

Examples of the olefin represented by the formula (II) include isobutene, 2-methyl-1-butene, 2-methyl-1-pentene, 2-methyl-1-hexene, 2-methyl-1-heptene, 2-methyl-1-octene, 2,3-dimethyl-1-butene, 2,3-dimethyl-1-pentene, 2,3-dimethyl-1-hexene, 2,3-dimethyl-1-heptene, 2,3-di.methyl-1-octene, 2,4-dimethyl-1-pentene, 2,4,4-trimethyl-1-pentene and vinylidene chloride, and isobutene, 2,3-dimethyl-1-butene and 2,4,4-trimethyl-1-pentene are preferable.

Examples of the diene compound include 1,3-butadiene, 1,4-pentadiene, 1,5-hexadiene, 1,6-heptadiene, 1,7-octadiene, 1,5-cyclooctadiene, 2,5-norbornadiene, dicyclopentadiene, 5-vinyl-2-norbornene, 5-allyl-2-norbornene, 4-vinyl-1-cyclohexene and 5-ethylidene-2-norbornene, and 1,4-pentadiene, 1,5-hexadiene, 2,5-norbornadiene, dicyclopentadiene, 5-vinyl-2-norbornene, 4-viynl-1-cyclohexene and 5-ethylidene-2-norbornene are preferable.

Examples of the vinyl aliphatic carboxylate include vinyl acetate, vinyl propionate and vinyl butyrate. Examples of the vinyl ether compound include methyl vinyl ether, ethyl vinyl ether and butyl vinyl ether. Examples of the vinyl halide include vinyl chloride, and examples of the cyanovinyl compound include acrylonitrile and methacrylonitrile.

The content of the structural unit derived from the addition-polymerizable monomer in the polymer (B-1) may be an amount where the adhesiveness of the cured product obtained by drying the aqueous emulsion of the present invention is not damaged, and it is preferably 5 moles or less relative to 100 moles of all structural units of which the polymer (B-1) is composed, and more preferably 1 mole or less.

The polymer (B-1) can be produced by polymerizing the corresponding monomers using a transition metal compound having an indenyl anion skeleton or a bridged cyclopentadienyl anion skeleton as a catalyst. Among them, preferred are processes described in JP 2003-82028 A, JP 2003-160621 A and JP 2000-128932 A.

In the production of the polymer (B-1), a honopolymer of ethylene, a homopolymer of propylene and/or a homopolymer of vinyl cyclohexane are sometimes produced in addition to the polymer (B-1) depending on kinds of the catalyst used or polymerization conditions, and in such cases, the polymer (B-1) can be easily isolated by conducting a solvent-extraction using Soxhlet extractor or the like. When toluene is used as the solvent, a homopolymer of vinyl cyclohexene

can be removed as an insoluble component. When chloroform is used as the solvent, a holopolymer of the olefin such as a homopolemer of ethylene and a homopolymer of propylene can be removed as an insoluble component, and the polymer (B-1) can be separated as a soluble component in these solvents. If there is no problem for its use, the polymer (B-1) containing the above-mentioned by-products may be used.
A molecular weight distribution of the polymer (B-1) (Mw/Mn=[weight-average molecular weight]/[number-average molecular weight]) is usually about 1.5 to about 10, and from the viewpoint of the mechanical strength and the transparency of the cured product obtained by drying the aqueous emulsion of the present invention, it is preferably about 1.5 to about 7 and more preferably about 1.5 to about 5.

The weight-average molecular weight (Mw) of the polymer (B-1) is usually about 5,000 to about 1,000,000, and from the viewpoint of the mechanical strength of the cured product obtained by drying the aqueous emulsion of the present invention and the flowability of the polymer (B-1), it is preferably about 10,000 to about 500,000 and more preferably about 15,000 to about 400,000.
The molecular weight distribution of the polymer (B-1) can be evaluated with gel permeation chromatograph (GPC).
The value of the melt flow rate (MFR) of the polymer (B-1) measured with a melt indexer (L217-E14011, manufactured by Techno Seven Co. Ltd.) under the condition of 190°C and 2.16 kgf according to JIS K7210 is usually 130 to 300 g/10-minute, and from the viewpoint of the dispersibility of the polymer (B-1) in the aqueous emulsion of the present invention, it is preferably 130 to 220 g/10-minute.

The polymer (B-2) is a polymer obtained by graft polymerizing an α, β-unsaturated carboxylic acid anhydride to the polymer (B-1).
The graft polymerization amount of the α, β-unsaturated carboxylic acid anhydride is usually about 0.01 to about 20 parts by weight relative to 100 parts by weight of the polymer (B-2), preferably about 0.05 to about 10 parts by weight and more preferably about 0.1 to about 5 parts by weight.
It is preferred that the aqueous emulsion of the present invention contains the polymer (B-2) wherein graft polymerization amount of the α, β-unsaturated carboxylic acid anhydride is 0.01 part by weight or more because the adhesiveness of the cured product obtained by drying it tends to be improved. It is preferred that the aqueous emulsion of the present invention contains the polymer (B-2) wherein the graft polymerization amount of the α, β-unsaturated carboxylic acid anhydride is 20% by weight or less because its coloration tends to be decreased.
Examples of the α, β-unsaturated carboxylic acid anhydride include an α, β-unsaturated carboxylic acid anhydride having 4 to 20 carbon atoms such as maleic anhydride, itaconic anhydride and citraconic anhydride, and maleic anhydride is preferable. Two or more kinds of the α, β-unsaturated carboxylic acid anhydrides may be used in combination.
The polymer (B-2) can be produced, for example, by a process comprising adding the α, β-unsaturated carboxylic acid anhydride to a melting polymer (B-1) obtained by melting the polymer (B-1) to conduct a graft polymerization, and a process comprising dissolving the polymer (B-1) in a solvent such as toluene and xylene followed by adding the α, β-unsaturated carboxylic acid anhydride to the solution obtained to conduct a graft polymerization.
The graft polymerization is usually conducted in the presence of a radical initiator.
The used amount of the radical initiator is usually 0.01 to 10 parts by weight relative to 100 parts of the polymer (B-1) and preferably 0.01 to 1 part by weight. When the used amount of the radical initiator is within such range, the adhesiveness of the cured product obtained by drying the aqueous emulsion of the present invention tends to be improved and the amount of the unreacted radical initiator contained in the polymer (B-2) tends to be decreased.
As the radical initiator, an organic peroxide is usually used, and an organic peroxide having 50 to 210°C of a decomposition temperature wherein the half life thereof becomes 1 minute is preferable. When the organic peroxide of which temperature of decomposition is 50°C or more is used, the graft amount of the α, β-unsaturated carboxylic acid anhydride tends to be increased, and when the organic peroxide of which temperature of decomposition is 210°C or less is used, the decomposition of the polymer (B-1) in the graft polymerization tends to be decreased. The organic peroxide having activities of extracting a proton from the polymer (B-1) after decomposing themselves to generate a radical is preferable.
Examples of the organic peroxide of which temperature of decomposition wherein the half period becomes 1 minute is 50 to 210°C include a diacylperoxide compound, a dialkylperoxide compound, a peroxyketal compound, an alkyl perester compound and a percarbonate compound. A dialkylperoxide compound, a diacylperoxide compound, a percarbonate compound and an alkyl perester compound are preferable. Specific examples thereof include dicetyl peroxydicarbonate, di-3-methoxybutyl peroxydicarbonate, di-2-ethylhexyl peroxydicarbonate, bis(4-tert-butylcyclohexyl) peroxydicarbonate, diisopropyl peroxydicarbonate, tert-butyl peroxyisopropylcarbonate, dimyristyl peroxycarbonate, 1,1,3,3-tetramethylbutyl peroxyneodecanoate, α-cumyl peroxyneodecanoate, tert-butyl peroxyneodecanoate, 1,1-bis(tert-butyl peroxy)cyclohexane, 2,2-bis(4,4-di-tert-butyl peroxycyclohexyl)propane, 1,1-bis(tert-butyl peroxy)cyclododecane, tert-hexyl peroxyisopropylmonocarbonate, tert-butyl peroxy-3,5,5-trimethylhexanoate, tert-butyl peroxylaurate, 2,5-dimethyl-2,5-di (benzoyl peroxy)hexane, tert-butyl peroxyacetate, 2,2-bis(tert-butyl peroxy)butene, tert-butyl peroxybenzoate, butyl 4,4-bis(tert-butyl peroxy)valerate, di-tert-butyl peroxyisophthalate, dicumylperoxide, α-α'-bis(tert-butylperoxy-m-isopropyl) benzene, 2,5-dimethyl-2,5-di(tert-butylperoxy)hexane, 1,3-bis(tert-butylperoxyisopropyl)benzene, tert-butyl cumylperoxide, di-tert-butylperoxide, p-menthanehydroperoxide and 2,5-dimethyl-2,5-di(tert-butylperoxy)-3-hexyne.

The additive amount of the radical initiator is usually 0.01 to 10 parts by weight relative to 100 parts by weight of the polymer (B-1) and preferably 0.01 to 1 part by weight.

Melting and kneading can be carried out using an extruding machine, and a process comprising adding the α, β-unsaturated carboxylic acid anhydride to a melting polymer (B-1) obtained by melting the polymer (B-1) to conduct a graft polymerization is preferable from the viewpoint that well-known various processes for mixing plural polymers or the polymer with a solid or liquid additives can be adopted. A process comprising separately mixing all of the components or some of the components in combination with Henschel mixer, ribbon blender and blender to obtain a uniform mixture and then melting and kneading the mixture is more preferable. As the melting and kneading means, well-known melting and kneading means such as Bamberry mixer, Plastomill, Brabender Plastograph and monoaxially or biaxially extruder can be widely adopted. Preferred is a process comprising feeding the mixture obtained by previously mixing enough the polymer (B-1), the α, β-unsaturated carboxylic acid anhydride and a radical initiator from the feed opening of the monoaxially or biaxially extruder to conduct kneading. The temperature of the section of the extruder in which melting and kneading are conducted (for example, the cylinder temperature of the extruder) is usually 50 to 300˚C, and preferably 80 to 270˚C. When the temperature is 50˚C or more, the graft amount tends to be improved, and when the temperature is 300˚C or less, the decomposition of the polymer (B-1) tends to be inhibited. Melting and kneading are preferably conducted in two stages. It is preferred that the temperature of melting and kneading of the second stage is set higher than that of the first stage. The time of melting and kneading is usually 0.1 to 30 minutes and preferably 0.1 to 5 minutes. When the time of melting and kneading is 0.1 minute or more, the graft amount tends to be improved, and when the time of melting and kneading is 30 minutes or less, the decomposition of the polymer (B-1) tends to be inhibited.

The structural unit derived from the α, β-unsaturated carboxylic acid anhydride in the polymer (B-2) may be a structural unit wherein the acid anhydride structure is maintained, and may be a structural unit derived from the α, β-unsaturated carboxylic acid wherein the acid anhydride structure is opened, and may be a structural unit containing both of a structural unit wherein the acid anhydride structure is maintained and a structural unit wherein the acid anhydride structure derived from the α, β-unsaturated carboxylic acid wherein the acid anhydride structure is opened.

The molecular weight distribution (Mw/Mn) of the polymer (B-2) is usually 1.5 to 10, preferably 1.5 to 7 and more preferably 1.5 to 5. The molecular weight distribution of the polymer (B-2) can be measured by the same method as that of the above-mentioned molecular weight distribution of the polymer (B-1).

The value of the melt flow rate (MFR) of the polymer (B-2) measured in accordance with JIS K7210 with a melt indexer (L217-E14011, manufactured by Techno Seven Co. Ltd.) under the condition of 190˚C and 2.16 kgf is usually 130 g/10-minute or more and 300 g/10-minute or less, and from the viewpoint of the dispersibility of the polymer (B-2) in the aqueous emulsion of the present invention, it is preferably 130 g/10-minute or more and 200 g/10-minute or less.

The aqueous emulsion of the present invention is an emulsion wherein it comprises water which is component (C) in addition to component (A) and component (B), and component (A) and component (B) are dispersoids and component (C) is a dispersion medium.

The volume-based median diameter of the dispersoid is usually 0.01 μm or more, and preferably 0.1 μm or more. The median diameter thereof is usually 3 μm or less, preferably 2 μm or less and more preferably 1 μm or less.

When the volume-based median diameter thereof is 0.01 μm or more, the production of the aqueous emulsion is easy, and when it is 3 μm or less, the stationary stability of the aqueous emulsion and the adhesiveness of the cured product obtained by drying the aqueous emulsion tend to be improved. "Stationary stability" means a property that the aqueous emulsion is homogeneous when the aqueous emulsion is stored for three days without stirring, that is, a property that a layer in which component (B) is rich and/or a layer in which component (C) is rich are difficult to be generated. "Volume-based median diameter" means a particle diameter corresponding to 50 % of the value of an integrated particle diameter distribution on a volume standard.

The content of component (A) in the aqueous emulsion of the present invention is usually 1 to 30 parts by weight relative to 100 parts by weight of (B), preferably 2 to 15 parts by weight and more preferably 2 to 10 parts by weight.

The sum of the contents of component (A) and component (B) in the aqueous emulsion of the present invention is usually 10 to 70 parts by weight relative to 100 parts by weight of the aqueous emulsion, preferably 20 to 60 parts by weight, more preferably 30 to 60 parts by weight and especially preferably 30 to 55 parts by weight.

The content of (C) in the aqueous emulsion of the present invention is usually 90 to 30 parts by weight relative to 100 parts by weight of the aqueous emulsion, preferably 80 to 40 parts by weight, more preferably 70 to 40 parts by weight and especially preferably 70 to 45 parts by weight.

The aqueous emulsion of the present invention includes a process comprising melt-kneading component (A) and component (B) followed by mixing the melting mixture obtained with water; a process comprising a step of mixing component (A) to the heated component (B); a process comprising heating and kneading component (A) and component (B) followed by dispersing the kneaded mixture obtained in component (C); and a process comprising dissolving component (B) in an organic solvent such as toluene, mixing the solution obtained with component (A) and removing the above-mentioned organic solvent from the mixture obtained.

Additionally, a chemical emulsifying method such as self-emulsification can be also used.

Among them, preferred are a process comprising melt-kneading component (A) and component (B) followed by mixing the melting mixture obtained with water and a process comprising a step of mixing component (A) to the heated component (B).

Examples of an apparatus used in the step of melt-kneading component (A) and component (B) include instruments having a barrel (cylinder) such as multi-screw extruders such as twin screw extruders, LABO PLASTOMILL (manufactured by Toyo Seiki Seisaku-sho Ltd.) and LABO PLASTOMILL μ (manufactured by Toyo Seiki Seisaku-sho Ltd.), a homogenizer and T.K. FILMIX (manufactured by PRIMIX Corporation), and instruments having no barrel (cylinder) such as a stirring vessel, a chemical stirrer, a vortex mixer, a flow jet mixer, a colloid mill, an ultrasonic wave generator, a high-pressure homogenizer, BUNSANKUN (trade mark registered by Fujikin Inc.), a static mixer and a micro mixer.

The shear rate of the instrument having a barrel is usually about 200 to about 100,000 $sec^{-1}$, and preferably about 1,000 to about 2,500 $sec^{-1}$. When the shear rate is 200 $sec^{-1}$ or more, the adhesiveness of the cured product obtained by drying the aqueous emulsion tends to improved, and when the shear rate is 100,000 $sec^{-1}$ or less, industrial production of the aqueous emulsion tends to become easier. "Shear rate" means a value obtained by dividing the peripheral velocity [mm/sec] of the outermost peripheral part of a screw element by the clearance [mm] between a screw and a barrel.

Examples of the process comprising melt-kneading component (A) and component (B) include a process for producing an aqueous emulsion by continuously extruding from a die by continuously feeding component (B) through a hopper or a feeding port of the twin screw extruder, conducting the heating and the melt-kneading of component (B), feeding component (A) under pressure through at least one feeding port provided in a compression zone, a metering zone or a degassing zone of the extruder, kneading component (A) with component (B) with screw followed by feeding component (C) through at least one feeding port provided in a compression zone.

Examples of the process comprising a step of mixing component (A) to the heated component (B) include a process comprising heating a cylinder of a kneader, putting component (B) into the cylinder, melting component (B) while rolling, puttirig component (A) therein, mixing component (A) with component (B) while rolling, putting the mixture obtained into heated water to disperse component (A) and component (B) in component (C) to obtain an aqueous emulsion.

As the process comprising mixing component (A) to the heated component (B), a process using a multi-screw extruder is preferable. Specific examples thereof include a process comprising feeding component (B) through a hopper of the multi-screw extruder having two or more screws in its casing, conducting heating and melt-kneading of component (B), feeding component (A) through at least one liquid feeding port provided in a compression zone and/or a metering zone of the extruder and dispersing component (A) and component (B) in component (C) while kneading.

The emulsion of the present invention may contain aqueous emulsions such as an aqueous polyurethane emulsion and an aqueous ethylene-vinyl acetate copolymer emulsion, thermosetting resins such as a urea resin, a melamine resin and a phenol resin, fillers such as clay, kaolin, talc and calcium carbonate, antiseptics, rust preventives, defoaming agents, foaming agents, thickeners such as polyacrylic acid, polyether, methyl cellulose, carboxymethylcellulose, polyvinyl alcohol and starch, viscosity modifiers, flame retarders, pigments such as titanium oxide, high-boiling-point solvents such as dimethyl succinate and dimethyl adipate, plasticizers or the like.

A cured product having a superior adhesiveness to base material such as wood-based materials, cellulosic materials, plastic materials, ceramic materials and metallic materials can be obtained by drying the aqueous emulsion of the present invention. The drying temperature is usually 30 to 180°C, and preferably 60 to 150°C. The drying time is usually about 1 minute to about 12 hours, and preferably about 10 minutes to about 6 hours. The drying may be carried out under ventilation or under reduced pressure. The cured product obtained by drying the aqueous emulsion of the present invention also has a superior adhesiveness to polyolefin (for example, polypropylene or the like) on which other materials such as coating materials are difficult to adhere.

A laminate wherein the aqueous emulsion layer is laminated onto a base material can be obtained by applying the aqueous emulsion of the present invention onto a base material, and a laminate having a base material layer and a layer consisting of the cured product can be formed by drying the laminate. The layer consisting of the cured product can be used for a coating material, a primer, a base sheet, an adhesive agent or the like.

The base material may be one capable of applying of the aqueous emulsion of the present invention, and its shape is optional.

Examples of the base material include wood-based materials such as wood, plywood, MDF, particle board and fiber board; paper-based materials such as wallpaper and wrapping paper; cellulosic materials such as cotton clothes, hemp cloth and rayon; plastic materials such as polyolefins such as polyethylene (polyolefin composed mainly of structural units derived from ethylene; the same shall apply hereinafter), polypropylene (polyolefin composed mainly of structural units derived from propylene; the same shall apply hereinafter) and polystyrene, polycarbonate, acrylonitrile/butadiene/styrene copolymer (ABS resin), (meth) acrylic resin polyester, polyether, polyvinyl chloride, polyurethane and forming polyurethane; ceramic materials such as glass and pottery; and metallic materials such as iron, stainless steel, copper and aluminum.

The base material may be a composite material made of a plurality of materials. It may also be a kneaded shaped article made of an inorganic filler such as talc, silica and activated carbon, carbon fiber or the like, and a plastic material.

Herein, the polyurethane is a macromolecule crosslinked with urethane linkages and usually can be obtained through a reaction between an alcohol (a compound having -OH) and an isocyanate (a compound having -NCO). Foaming polyurethane is a polyurethane which is to be foamed with carbon dioxide generated from a reaction between an isocyanate and water which is a crosslinking agent or a volatile solvent such as Freon. Semirigid polyurethane is usually used for automotive interior applications and rigid polyurethane is usually used for coating materials.
Among the based materials, preferred are polypropylene, polystyrene, polycarbonate, acrylonitrile/butadiene/styrene copolymer (ABS resin), polyethylene terephthalate, polyvinyl chloride, (meth) acrylic resin, glass, aluminum and polyurethane, and more preferred are polypropylene, polyvinyl chloride, glass, aluminum and polyurethane.
The cured product obtained from the aqueous emulsion of the present invention can be used as an adhesive layer adhering two kinds of base materials. When one of the base materials is a water-absorbing base material such as a wood-based material, a paper-based material and a cellulosic material, the aqueous emulsion of the present invention is applied onto the water-absorbing base material, and then, component (C) contained in the aqueous emulsion is absorbed in the water-absorbing base material to form an adhesive layer containing component (A) and component (B) on the water-absorbing base material. Therefore, a laminate wherein the water-absorbing base material, the adhesive layer and the other base material are layered in this order can be obtained by applying the other base material on the adhesive layer.
When one of the base materials is a base material incapable of absorbing water such as a polyolefin, a laminate can be obtained by applying the aqueous emulsion of the present invention onto the base material incapable of absorbing water, heating to form a cured product on the base material incapable of absorbing water, applying the other base material onto the cured product, and heating. The heating temperature is usually 60 to 200˚C. The aqueous emulsion of the present invention gives a cured product having a superior adhesiveness even at 60 to 90˚C of the heating temperature, and further gives a cured product having a superior adhesiveness even at low temperature of 65 to 80˚C of the heating temperature.
Onto the cured product of the present invention, a liquid material may be further applied as a coating material. Examples of the coating material include the materials for the above-mentioned base materials such as polyurethane and whe it is a liquid material, it has a superior adhesiveness to the cured product.

Examples

The present invention will be illustrated in more detail by Examples bellow, but the present invention is not limited to these Examples.

[Solid Content]

The solid content was measured by the method in accordance with JIS K-6828.

[Molecular Weight and Molecular Weight Distribution]

The molecular weight of component (B) was measured with gel permeation chromatography (GPC). The calibration was conducted using polystyrenes (molecular weights 688 to 400,000) standard materials, and it was measured under the conditions given below. The molecular weight distribution was evaluated by the ratio (Mw/Mn) of a weight average molecular weight (Mw) to a number average molecular weight (Mn).
Model: 150-C manufactured by Waters
Column: shodex packed column A-80M
Measurement temperature: 140˚C
Measurement solvent: orthodichlorobenzene
Measurement concentration: 1 mg/ml

[Content of Structural Unit Derived From Vinylcyclohexane]

The content of the structural unit derived from vinylcyclohexane in component (B) was calculated based on the result obtained by measuring $^{13}$C-NMR spectrum of component (B) under the conditions given below and the following formula (X).
$^{13}$C-NMR apparatus: DRX600 manufactured by BRUKER
Measurement solvent: mixed solvent of orthodichlorobenzene and orthodichlorobenzene-d 4:1 (volume ratio)
Measurement temperature: 135˚C
Measurement method: Powergate Decouping method Pulse angle: 45˚
Measurement basis: tetramethylsilane

$$\text{Content of the structural unit derived from vinylcyclohexane (mol\%)} = 100 \times A/(B-2A) \quad (X)$$

wherein A represents an integlation value of integration of signals at 45 ppm to 40 ppm and B represents an integlation value of integration of signals at 35 ppm to 25 ppm.

[Graft Amount]

The graft amount of maleic anhydride in component (B) was determined as followed.

(i) a sample solution is prepared by dissolving 1.0 g of a sample in 20 ml of xylene.
(ii) the solution prepared is dropped into 300 ml of methanol while stirring.
(iii) The precipitate in methanol is collected, and then, dried at 80˚C for 8 hours.
(iv) A film having 100 μm of thickness is prepared by hot pressing using the solid dried.
(v) The infrared absorption spectrum of the film prepared is measured, and the maleic acid graft amount is determined based on the absorption peak near 1780 $cm^{-1}$.

[Melt Flow Rate]

The melt flow rate (MFR) of the polymer was measured with a melt indexer (L217-E14011, manufactured by Techno Seven Co. Ltd.) under the condition of 190˚C and 2.16 kgf according to JIS K7210.

[Glass-transition Temperature and Melting Point]

The glass-transition temperature ([Tg], unit: ˚C) and the melting point ([Tm], unit: ˚C) were determined based on the differential scanning calorimetry curve obtained in step (c) by measuring a differential scanning calorimetry curve under the conditions given below with a differential scanning calorimeter (manufactured by Seiko Instruments Inc. SSC-5200).

<Measurement condition>

(a) A sample is heated from 20˚C to 200˚C at a rate of 10˚C/minute, and then, maintained at 200˚C for 10 minutes.
(b) The sample obtained in (a) is cooled down from 200˚C to -100˚C at a rate of 10˚C/minute, and then, maintained at -100˚C for 10 minutes.
(c) The sample obtained in (b) is heated from -100˚C to 200˚C at a rate of 10˚C/minute.

[Intrinsic viscosity]

The intrinsic viscosity ([η], unit: dl/g) of component (B) was measured at 135˚C by using tetralin as a solvent and by using an Ubbelohde's viscometer.

[Degree of $NH_3$ Neutralization]

The degree of $NH_3$ neutralization of the emulsifying agent was represented by a ratio (%) of mole number of ammonia used to total of mole number of the structural unit derived from acrylic acid and/or methacrylic acid and mole number of the structural unit derived from 2-merhacryloyloxyethylsuccinic acid in component (A) contained in the emulsifying agent. Herein, it was assumed that mole number of each of structural units is the same as mole number of each of monomers used for production of component (A).

As the monomer from which the structural unit (a1) is derived, acrylic acid (manufactured by Mitsubishi Chemical Corporation, hereinafter, simply referred to as AA) and methacrylic acid (manufactured by Kanto Chemical Co., Inc., hereinafter, simply referred to as MAA) were used. As the monomer from which the structural unit (a2) is derived, 2-hydroxyethyl acrylate (manufactured by Kanto Chemical Co., Inc., hereinafter, simply referred to as HEA) was used.
As the monomer from which the structural unit (b1) is derived, methyl methacrylate (manufactured by Mitsubishi Rayon Co., Ltd., hereinafter, simply referred to as MMA), ethyl acrylate (manufactured by Kanto Chemical Co., Inc., hereinafter, simply referred to as EA) and lauryl methacrylate (manufactured by Mitsubishi Rayon Co., Ltd., hereinafter, simply referred to as SLMA) were used. As the monomer from which the structural unit (b2) is derived, N,N-dimethylaminoethyl methacrylate (manufactured by Sanyo Chemical Industries, Ltd., hereinafter, simply referred to as DMA) was used, and as the monomer from which the structural unit (b3) is derived, 2-merhacryloyloxyethylsuccinic acid (manufactured by Kyoeisha Chemical Co., Ltd., hereinafter, simply referred to as HO-MS) was used, and component (A) was produced. "Part" and "%" in the following examples are by weight, unless otherwise stated.

<Production Example 1 of Component (A)>

Seven point five (7.5) parts (10.9molarratio) ofAA, 22.5 parts (27.4 molar ratio) of MAA, 29.5 parts (26.6 molar ratio) of HEA, 29.5 parts (30.8 molar ratio) of EA and 11.0 parts (4.4 molar ratio) of SLMA were mixed at 10 to 30˚C to prepare 100 parts of a monomer mixture. Herein, "Molar ratio" represents a molar number of each of monomers when sum of molar numbers of the above-mentioned monomers is 100.
Into a reactor, 100 parts of ion-exchanged water, 150 parts of isopropanol and 100 parts of the monomer mixture were charged. After replacing the gases in the reactor into nitrogen, the inner temperature of the solution obtained was adjusted to 80˚C with stirring. Further, the mixture obtained was stirred at 80˚C for 3 hours under an atmosphere of nitrogen while about 0.9 part of 2,2'-azobisisobutyronitrile was gradually added as a polymerization initiator. Next, the reaction mixture obtained was heated up until it is boiled to distill isopropanol away. After the concentrate obtained was cooled down to 50˚C, 28 parts (46 molar ratio, the molar ratio represents a molar number of ammonia when total molar numbers of the above-mentioned monomers is 100.) of 28% aqueous ammonia solution was mixed therewith and water was further added thereto to obtain a viscous emulsifying agent which contains an acrylic resin and of which solid content was 50%. Yield 90%. The emulsifying agent obtained is called as (A-1). The result is shown in Table 1. Herein, "solid" means components other than water and ammonia.

<Production Example 2 of Component (A)>

A viscous emulsifying agent containing an acrylic resin was obtained according to the same manner as Production Example 1 of Component (A) except that the kind and amount of the monomers used and the amount of ammonia were changed to those described in Table 1. The emulsifying agent obtained is called as (A-2). The results are shown in Table 1.

[Table 1]

| | | Production Example 1 | | Production Example 2 | |
|---|---|---|---|---|---|
| | | (A-1) | | (A-2) | |
| | | Part | Molar ratio | Part | Molar ratio |
| monomer | AA | 7.5 | 10.9 | 14.5 | 27.2 |
| | MAA | 22.5 | 27.4 | 0 | 0 |
| | HO-MS | 0 | 0 | 22.5 | 13.2 |
| | DMA | 0 | 0 | 33.0 | 28.4 |
| | MMA | 0 | 0 | 15.0 | 20.3 |
| | EA | 29.5 | 30.8 | 0 | 0 |
| | SLMA | 1.1.0 | 4.4 | 10.0 | 5.1 |
| | HEA | 29.5 | 26.2 | 5.0 | 5.8 |
| | Sum | 100 | 100 | 100 | 100 |
| Used Amount of $NH_3$ | | 28 | 46 | 29 | 48 |
| Degree of $NH_3$ neutralization (%) | | 120 | | 119 | |
| Solid content (%) | | 50 | | 45 | |

(continued)

| | Production Example 1 | | Production Example 2 | |
|---|---|---|---|---|
| | (A-1) | | (A-2) | |
| | Part | Molar ratio | Part | Molar ratio |
| Yield (%) | 90 | | 90 | |

<Production Example 1 of component (B)>

After replacing the gases in a stainless steel reactor into argon gas, 386 parts of vinylcyclohexane and 3,640 parts of toluene were charged therein. After the mixture obtained was heated up to 50˚C, ethylene was charged into the reactor with pressurizing at 0.6 MPa. Further, 10 parts of a solution of triisobutylaluminum in toluene (manufactured by Tosoh Akzo Co., Ltd., concentration 20 wt%) was charged therein, and then a solution obtained by dissolving 0.001 part of diethylsilyl(tetramethylcyclopentadienyl)(3-tert-butyl-5-methyl-2-phenoxy)titanium dichloride in 87 parts of dehydrated toluene and a solution obtained by dissolving 0.03 part of dimethylanilinium tetrakis(pentafluorophenyl)borate in 122 parts of dehydrated toluene were charged into the reactor. The mixture obtained was stirred for 2 hours. The reaction mixture obtained was pored into about 10,000 parts of acetone and a white solid precipitated was isolated by filtration. The solid isolated was washed with acetone and then dried under reduced pressure to obtain 300 parts of an ethylene·vinylcyclohexane copolymer. Mn of the copolymer obtained was 15,600, Mw/Mn was 2.0, [η] was 0.48 dl/g, Tm was 57˚C, Tg was -28˚C, and a content ratio of the structural unit derived from vinylcyclohexane was 13 mol%. The copolymer obtained is called as (B-1a).

<Production Example 2 of Component (B)>

To 100 parts of (B-1a), 0.4 part of maleic anhydride and 0.04 part of 1,3-bis(tert-butylperoxyisapropyl)benzene were added, and the mixture obtained was stirred enough to conduct a pre-mixing. The mixture obtained was fed through a feeding port of a twin screw extruder to carry out a melt-kneading. The melt-kneading was divided into two stages, the first half and the second half, and the temperature of the first half where the melt-kneading was conducted in the extruder and the temperature of the second half was set at 180˚C and at 260˚C, respectively, to conduct a melt-kneading. As the result, a polymer obtained by graft polymerizing maleic anhydride to ethylene·vinylcyclohexane copolymer was obtained. The graft amount of maleic acid of the polymer obtained was 0.2%, and MFR thereof was 180 g/10-minute (at 190˚C, load: 2.16 kgf). The polymer obtained is called as (B-2a).

<Production Example 3 of Component (B)>

A propylene·vinylcyclohexane copolymer can be obtained according to the same manner as <Production Example 1 of Component (B)> except that propylene is used in place of ethylene. The polymer obtained is called as (B-1b).

<Production Example 4 of Component (B)>

A polymer obtained by graft polymerizing maleic anhydride to propylene·vinylcyclohexane copolymer can be obtained according to the same manner as <Production Example 2 of Component (B)> except that (B-1b) is used in place of (B-1a). The polymer obtained is called as (B-2b).

Example 1

A cylinder temperature of an intermeshing co-rotating twin screw extruder (manufactured by The Japan Steel Works, Ltd.,: TEX30φ, L/D=30) was set at 110˚C, and then, 110 parts of (B-2a) was continuously fed through a hopper of the extruder at a rotating speed of the screw of 350 rpm into the cylinder. Through a feeding port provided in a bent zone of the extruder, (A-1) of which solid amount was 10 parts was continuously fed with gear pump while pressing, and (B-2a) and (A-1) were mixed with continuously extruding to obtain a creamy white aqueous emulsion.
The volume-based median diameter of the dispersoid in the aqueous emulsion obtained was 0.6 μm. The volume-based median diameter was measured with a laser diffraction/scattering particle size distribution analyzer (LA-910, HORIBA, Ltd., particle refractive index: 1.50-0.20i).
The adhesiveness of the cured product obtained from the aqueous emulsion was evaluated according to the following test method. The results are shown in Table 2.

<Test method of Adhesiveness>

After washing the surface of polypropylene plate having 3 mm of thickness with isopropanol, an aqueous emulsion was applied onto polypropylene plate using a bar coater so that the thickness of the film of the cured product obtained by drying became 10 μm. The film obtained was dried for 5 minutes at 80˚C with a hot-air drier followed by further heating and drying it for 30 minutes with oven at 90˚C to obtain a cured product.
The cured product obtained was cut up on a grid at a 1 mm-clearance interval in accordance with JIS-K5400 (grid peeling tape method test), and then, scotch tape was put thereon. After passage of 1 to 2 minutes, one end of the tape was hold and peeled at a right angle. The adhesiveness was evaluated based on the following evaluation basis.
◎: The peeling of the cured product was not observed at all.
○: The peeling of the cured product was observed and the peeling area was less than 40% of the area of square.
×: The peeling of the cured product was observed and the peeling area was 40% or more of the area of square.

<Measurement of Particle Size of Coarse Particle>

The aqueous emulsion obtained was poured into the front edge on the deep channel side of a grind meter manufactured by Gardner (range 0 to 100 μm), and a scraper was moved by pulling from the front edge on the deep channel side to the shallow side over 1 to 2 seconds at an equal rate with impressing the scraper on the surface of the grind meter.
Within three seconds after finishing pulling, scale wherein five or more particles began appearing was read to be set as a particle size of coarse particle. When the particle size of coarse particle is big, a big foreign material tends to exist in the aqueous emulsion.

Example 2

An aqueous emulsion was obtained according to the same manner as Example 1 except that (A-2) was used in place of (A-1).
The volume-based median diameter of the dispersoid in the aqueous emulsion obtained was 0.9 μm, and the evaluation results of the adhesiveness of the cured product obtained from the aqueous emulsion and of the particle size of coarse particle are shown in Table 2.

[Table 2]

| | | | Example 1 | Example 2 |
|---|---|---|---|---|
| Aqueous Emulsion | Component (A) | Kind | (A-1) | (A-2) |
| | | Part | 10 | 10 |
| | Component (B) | Kind | (B-2a) | (B-2a) |
| | | MFR | 180 | 180 |
| | | Part | 110 | 110 |
| | Component (C) | Part | 110 | 110 |
| Adhesiveness Evaluation | | | ◎ | ◎ |
| particle size of coarse particle (μm) | | | 30 | 30 |

Example 3

An aqueous emulsion can be obtained according to the same manner as Example 1 except that (B-1a) is used in place of (B-2a).

Example 4

An aqueous emulsion can be obtained according to the same manner as Example 1 except that (B-1b) is used in place of (B-2a).

Example 5

An aqueous emulsion can be obtained according to the same manner as Example 1 except that (B-2b) is used in place of (B-2a).

Example 6

An aqueous emulsion can be obtained according to the same manner as Example 2 except that (B-1a) is used in place of (B-2a).

Example 7

An aqueous emulsion can be obtained according to the same manner as Example 2 except that (B-1b) is used in place of (B-2a).

Example 8

An aqueous emulsion can be obtained according to the same manner as Example 2 except that (B-2b) is used in place of (B-2a).

Industrial Applicability

The aqueous emulsion of the present invention can provide a cured product having a superior adhesiveness to a base material on which the other materials such as coating materials such as polypropylene are difficult to adhere.

## Claims

1. An aqueous emulsion comprising the following components (A), (B) and (C):

   (A) an acrylic resin comprising a structural unit derived from an α, β-unsaturated carboxylic acid, and a structural unit derived from an α, β-unsaturated carboxylic acid ester derived from an aliphatic diol having 1 to 10 carbon atoms and having at least one hydroxyl group bonded to a primary carbon atom or a secondary carbon atom and an α, β-unsaturated carboxylic acid
   (B) a thermoplastic polymer
   (C) water.

2. The aqueous emulsion according to claim 1, wherein component (B) contains a thermoplastic polymer comprising a structural unit derived from ethylene and/or propylene.

3. The aqueous emulsion according to claim 1, wherein component (B) contains a copolymer comprising a structural unit derived from ethylene and/or propylene and a structural unit derived from a vinyl compound represented by the formula (I):

   $$CH_2=CH\text{-}R \qquad (I)$$

   wherein R represents a secondary alkyl group, a tertiary alkyl group or a alicyclic hydrocarbon group,
   or a polymer obtained by graft polymerizing an α, β-unsaturated carboxylic acid anhydride to the copolymer.

4. The aqueous emulsion according to claim 3, wherein the vinyl compound represented by the formula (I) is vinylcyclohexane.

5. The aqueous emulsion according to any of claims 1 to 4, wherein component (B) is a thermoplastic polymer of which MFR (190˚C, 2.16 kgf) is 130 g/10-minute or more and 300 g/10-minute or less.

6. The aqueous emulsion according to any of claims 1 to 5, wherein the aqueous emulsion is an aqueous emulsion in which a dispersoid is the above-mentioned components (A) and (B) and a dispersion medium is the above-mentioned component (C), and the volume-based median diameter of the dispersoid is 0.01 μm to 3 μm.

**7.** The aqueous emulsion according to any of claims 1 to 6, wherein the aliphatic diol having 1 to 10 carbon atoms and having at least one hydroxyl group bonded to a primary carbon atom or a secondary carbon atom is an α, ω-alkanediol having 1 to 10 carbon atoms.

**8.** A process for producing an aqueous emulsion comprising a step of melt-kneading components (A) and (B) followed by mixing the melting mixture obtained with water:

(A) an acrylic resin comprising a structural unit derived from an α, β-unsaturated carboxylic acid, and a structural unit derived from an α, β-unsaturated carboxylic acid ester derived from an aliphatic diol having 1 to 10 carbon atoms and having at least one hydroxyl group bonded to a primary carbon atom or a secondary carbon atom and an α, β-unsaturated carboxylic acid
(B) a thermoplastic polymer
(C) water.

**9.** A cured product obtained by drying the aqueous emulsion according to any of claims 1 to 6.

**10.** A laminate comprising a base material layer consisting of at least one material selected from the group consisting of a wood-based material, a cellulosic material, a plastic material, a ceramic material and a metallic material, and a layer consisting of the cured product according to claim 9.

**11.** A process for producing a laminate comprising a step of coating the aqueous emulsion according to any of claims 1 to 8 onto a base material layer consisting of at least one material selected from the group consisting of a wood-based material, a cellulosic material, a plastic material, ceramic material and a metallic material to obtain a laminate having the base material layer and a layer comprising the aqueous emulsion, and
a step of drying the laminate obtained in the above-mentioned step to obtain a laminate comprising the base material layer and a cured product layer obtained from the aqueous emulsion.

**12.** An emulsifying agent comprising an acrylic resin comprising a structural unit derived from an α, β-unsaturated carboxylic acid, and a structural unit derived from an α, β-unsaturated carboxylic acid ester derived from an aliphatic diol having 1 to 10 carbon atoms and having at least one hydroxyl group bonded to a primary carbon atom or a secondary carbon atom and an α, β-unsaturated carboxylic acid as an active ingredient.

**13.** The emulsifying agent according to claim 12, wherein the structural unit derived from an α, β-unsaturated carboxylic acid is a structural unit derived from at least one selected from the group consisting of acrylic acid and methacrylic acid.

**INTERNATIONAL SEARCH REPORT**

International application No.
PCT/JP2010/059990

A. CLASSIFICATION OF SUBJECT MATTER
See extra sheet.

According to International Patent Classification (IPC) or to both national classification and IPC

B. FIELDS SEARCHED

Minimum documentation searched (classification system followed by classification symbols)
C08L33/02, B01F17/52, B01J13/00, B05D7/00, C08J3/03, C08J7/04, C08L23/02, C08L23/26, C08L101/00, C09D5/02, C09D123/04, C09D123/10, C09D133/02, C09D151/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2008/072689 A1 (Nippon Paper Chemicals Co., Ltd.), 19 June 2008 (19.06.2008), claims; examples & US 2010/0029836 A & CA 2672498 A & KR 10-2009-0080126 A & CN 101589101 A | 1-13 |
| A | JP 2008-63557 A (Sumitomo Chemical Co., Ltd.), 21 March 2008 (21.03.2008), claims; examples & US 2009/0186232 A1 & EP 2014719 A1 & WO 2007/123071 A1 & KR 10-2009-0006121 A & CN 101460565 A | 1-13 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 July, 2010 (08.07.10) | 20 July, 2010 (20.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/059990

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-24755 A (Chuo Rika Kogyo Corp.), 07 February 2008 (07.02.2008), claims; examples (Family: none) | 1-13 |
| P,A | JP 2009-173752 A (Chuo Rika Kogyo Corp.), 06 August 2009 (06.08.2009), claims (Family: none) | 1-13 |
| P,A | WO 2010/030033 A1 (Sumitomo Chemical Co., Ltd.), 18 March 2010 (18.03.2010), claims; examples (Family: none) | 1-13 |
| P,A | JP 2010-90369 A (Sumitomo Chemical Co., Ltd.), 22 April 2010 (22.04.2010), claims (Family: none) | 1-13 |

Form PCT/ISA/210 (continuation of second sheet) (July 2009)

**INTERNATIONAL SEARCH REPORT**

International application No.
PCT/JP2010/059990

Continuation of A. CLASSIFICATION OF SUBJECT MATTER
(International Patent Classification (IPC))

*C08L33/02*(2006.01)i, *B01F17/52*(2006.01)i, *B01J13/00*(2006.01)i, *B05D7/00*(2006.01)i, *C08J3/03*(2006.01)i, *C08J7/04*(2006.01)i, *C08L23/02*(2006.01)i, *C08L23/26*(2006.01)i, *C08L101/00*(2006.01)i, *C09D5/02*(2006.01)i, *C09D123/04*(2006.01)i, *C09D123/10*(2006.01)i, *C09D133/02*(2006.01)i, *C09D151/06*(2006.01)i

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEISEI57832 A
- JP 2003082028 A
- JP 2003160621 A
- JP 2000128932 A